# EUROPÄISCHE PATENTSCHRIFT

(11) **EP 3 315 382 B1**
(45) Veröffentlichungstag und Bekanntmachung des Hinweises auf die Patenterteilung: **13.05.2020**
(21) Anmeldenummer: 17194331.9
(22) Anmeldetag: 02.10.2017
(51) Int. Cl.: B62D 1/22, B62D 1/183

(54) **LENKSYSTEM FÜR EIN KRAFTFAHRZEUG, VORZUGSWEISE EIN FAHRSCHUL-KRAFTFAHRZEUG**
STEERING SYSTEM FOR A MOTOR VEHICLE, PREFERABLY A TRAINING VEHICLE
SYSTÈME DE GUIDAGE POUR UN VÉHICULE AUTOMOBILE, DE PRÉFÉRENCE UN VÉHICULE AUTOMOBILE DES ÉCOLES DE CONDUITE

(30) Priorität: 25.10.2016 AT 4972016
(43) Veröffentlichungstag der Anmeldung: 02.05.2018
(73) Patentinhaber: MAN Truck & Bus Österreich GesmbH, 4400 Steyr (AT)
(72) Erfinder: Griessler, Matthias, 3435 Zwentendorf (AT)
(74) Vertreter: v. Bezold & Partner Patentanwälte - PartG mbB

(56) Entgegenhaltungen:
- AT-B- 330 590
- US-A- 3 814 204
- US-A1- 2003 173 136

## Beschreibung

Die Erfindung betrifft ein Lenksystem für ein Kraftfahrzeug, vorzugsweise für ein Fahrschul-Kraftfahrzeug.

Kraftfahrzeuge mit Lenksystemen mit einer Zusatz- oder Doppellenkung für Fahrschulzwecke sind im Stand der Technik bereits bekannt. Derartige Lenksysteme umfassen den eigentlichen Serienlenkungsstrang für einen Fahrschüler, wobei der Serienlenkungsstrang gewöhnlich ein Lenkrad zum Lenken des Fahrzeugs und ein Lenkgetriebe aufweist. Das Lenkrad ist mit dem Lenkgetriebe verbunden, wobei das Lenkgetriebe die Lenkbewegungen des Lenkrads an Räder des Kraftfahrzeugs weiterleitet. Zusätzlich zu dem eigentlichen Serienlenkungsstrang sehen diese Lenksysteme üblicherweise auch einen Hilfslenkungsstrang für einen Fahrschullehrer vor, der sich aus einem zusätzlichen Lenkrad und einer zusätzlichen Anbindung an das Lenkgetriebe zusammensetzt. Mittels des Hilfslenkungsstrangs ist es beispielsweise bei einem Fahrschulbetrieb eines Kraftfahrzeugs möglich, dass der Fahrlehrer, der üblicherweise auf einem Beifahrersitz des Kraftfahrzeugs sitzt, in die Lenkvorgänge des Fahrschülers, der üblicherweise auf dem Fahrersitz sitzt, aktiv eingreifen kann.

Aus der Praxis sind Hilfslenkungsstränge bekannt, bei denen das Drehmoment von dem zusätzlichen Lenkrad entweder über einen reinen Kettentrieb oder über Gelenkwellen mit Winkelgetrieben zum Serienlenkungsstrang weitergeleitet wird. Ein Beispiel für eine derartige Kopplung mittels einer Gelenkwelle ist z. B. aus der US 3,814,204 bekannt. Das Problem hierbei ist vor allem, dass dafür der erforderliche Platz im Kraftfahrzeug vorhanden sein muss, so dass die Realisierung stark von der Bauraumsituation im Kraftfahrzeug abhängt.

Weiterhin ist aus der AT 330 590 B eine Zusatzlenkvorrichtung für in entgegengesetzte Fahrtrichtungen fahrbare Traktoren bekannt, bei der das Lenkrad des Traktors über ein der Drehmomentübertragung dienendes Zwischenglied und eine lösbare Kupplung mit einem vor einem nach hinten weisenden drehbaren Fahrersitz angeordneten Hilfslenkrad verbindbar ist.

Zum Stand der Technik kann ferner auf die US 2003/0173136 A1 verwiesen werden, in der insbesondere ein manuelles Steuermittel für eine elektrisch angetriebene und angesteuerte Lenkung eines Fahrzeugs offenbart wird.

Bei anderen aus der Praxis bekannten Hilfslenkungssträngen wird das Drehmoment von dem zusätzlichen Lenkrad hydrostatisch zum Serienlenkungsstrang übertragen. Es ist hierbei allerdings kaum möglich, keine unerwünschte zusätzliche Leistung ins Lenksystem einzubringen. Es kommt somit üblicherweise zu einer hydraulischen Verstärkung, die oft nicht gewünscht ist. Außerdem ist hierfür üblicherweise eine Hydraulikpumpe erforderlich, die zusätzliche Kosten und zusätzliches Gewicht verursacht und meist elektrisch betrieben werden muss.

Eine Aufgabe der Erfindung ist es, ein verbessertes und/oder alternatives Lenksystem für ein Kraftfahrzeug zu schaffen, vorzugsweise ein Lenksystem, mittels dem relativ unabhängig von der Bauraumsituation des Kraftfahrzeugs ein Drehmoment einer beifahrerseitigen Lenkvorrichtung auf ein Lenkgetriebe übertragbar ist und zwar insbesondere verstärkungsfrei und/oder rein mechanisch.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung betrifft ein Lenksystem für ein Kraftfahrzeug, vorzugsweise für ein Fahrschul-Kraftfahrzeug. Das Kraftfahrzeug ist vorzugsweise ein Personenkraftwagen oder ein Nutzfahrzeug, z. B. ein Omnibus oder ein Lastkraftwagen, insbesondere zu Fahrschulzwecken.

Das Lenksystem umfasst ein Lenkgetriebe, über das vorzugsweise Räder des Kraftfahrzeugs lenkbar sind.

Das Lenksystem umfasst außerdem eine fahrerseitige Lenkvorrichtung, z. B. mit einem Lenkrad, zum Lenken des Kraftfahrzeugs über das Lenkgetriebe. Die fahrerseitige Lenkvorrichtung dient vorzugsweise zur Nutzung durch einen Fahrschüler und/oder ist Teil eines Serienlenkungsstrangs.

Das Lenksystem umfasst ferner eine beifahrerseitige Lenkvorrichtung, z. B. mit einem zusätzlichen Lenkrad, zum Lenken des Kraftfahrzeugs zweckmäßig ebenfalls über das Lenkgetriebe. Die beifahrerseitige Lenkvorrichtung dient vorzugsweise zur Nutzung durch einen Fahrlehrer und/oder ist Teil eines Hilfslenkungsstrangs.

Das Lenksystem zeichnet sich insbesondere dadurch aus, dass die beifahrerseitige Lenkvorrichtung über eine zumindest in einem Teilbereich ihrer Länge flexible Wellenverbindung (zweckmäßig flexible Welle) zum Übertragen eines Drehmoments mit dem Lenkgetriebe in Verbindung steht. Die flexible Wellenverbindung kann somit zweckmäßig über ihre im Wesentlichen gesamte Längserstreckung oder nur abschnittsweise flexibel ausgebildet sein.

Mit einer zumindest abschnittsweisen flexiblen Wellenverbindung kann das Drehmoment relativ unabhängig von der Beifahrerseite auf die Fahrerseite, insbesondere das Lenkgetriebe, übertragen werden. Zu beachten ist lediglich insbesondere der Mindestbiegeradius der flexiblen Wellenverbindung. Außerdem kann durch die flexible Wellenverbindung ein rein mechanisches Lenksystem realisiert werden, vorzugsweise mit einer Übersetzung von 1:1, so dass eine unerwünschte Lenkverstärkung zweckmäßig vermieden werden kann.

Das Lenkgetriebe ist vorzugsweise vorgesehen, um eine über die fahrerseitige Lenkvorrichtung - oder im Fahrschul-Bedarfsfall oder einer Notsituation über die beifahrerseitige Lenkvorrichtung - erzeugte Lenkbewegung an Räder des Kraftfahrzeugs zu übertragen. Es ist möglich, dass das Lenkgetriebe z. B. eine Zahnstangenlenkung, eine Schneckenlenkung, eine Schraubenspindellenkung oder eine Kugelumlauflenkung umfassen kann, die z. B. elektrisch oder hydraulisch unterstützt sein können.

Das Lenksystem, insbesondere die beifahrerseitige Lenkvorrichtung, ermöglicht z. B. in einer Situation, bei der ein Fahrschüler das Kraftfahrzeug zeitweise nicht unter Kontrolle hat, dass ein Fahrlehrer gezielt durch eigene Lenkbewegungen die Kontrolle über das Kraftfahrzeug übernehmen kann, ohne die von dem Beifahrersitz entfernte fahrerseitige Lenkvorrichtung ergreifen zu müssen.

Die flexible Wellenverbindung kann z. B. in einem flexiblen Schutzmantel angeordnet sein, mit dem Vorteil, dass die flexible Wellenverbindung vor Schmutz, Feuchtigkeit oder anderen rostfördernden Einflüssen schützbar ist. Auch kann der Schutzmantel ermöglichen, dass die flexible Wellenverbindung keine benachbarten Bauteile unmittelbar kontaktiert.

Es ist möglich, dass die beifahrerseitige Lenkvorrichtung über eine Drehmomentübertragungseinrichtung zum Übertragen eines Drehmoments mit der flexiblen Wellenverbindung in Verbindung steht und die Drehmomentübertragungseinrichtung vorzugsweise eine Lenkungsgelenkwelle aufweist. Die Drehmomentübertragungseinrichtung kann beispielsweise eine längenverstellbare Lenkungsgelenkwelle mit mindestens einem Kreuzgelenk umfassen.

In einer weiteren Ausführungsform der Erfindung kann relativ zur Übertragungsrichtung des Drehmoments der beifahrerseitigen Lenkvorrichtung zwischen der Drehmomentübertragungseinrichtung und der flexiblen Wellenverbindung ein Lagerelement (z. B. eine Flanschlagerung) angeordnet sein, insbesondere zur Lagerung der Drehmomentübertragungseinrichtung und/oder der flexiblen Wellenverbindung. Die durch das Lagerelement erzeugbare Lagerung hat insbesondere den Vorteil, dass durch das Drehen der Drehmomentübertragungseinrichtung entstehende Radialkräfte nicht oder nur stark reduziert auf die flexible Wellenverbindung weitergeleitet werden können.

In einer weiteren Ausführungsform der Erfindung kann die Drehmomentübertragungseinrichtung über einen Adapter mit dem Lagerelement und/oder der flexiblen Wellenverbindung verbunden sein.

Nach einer weiteren Ausführungsform der Erfindung kann das Lenksystem eine Überlastkupplung umfassen, z. B. mittels der die beifahrerseitige Lenkvorrichtung und/oder die flexible Wellenverbindung von dem Lenkgetriebe entkoppelbar ist, vorzugsweise zum Schutz der flexiblen Wellenverbindung vor einer Überbeanspruchung und/oder im Falle einer Fehlfunktion des durch die beifahrerseitige Lenkvorrichtung steuerbaren Hilfslenkungsstrangs. Dies hat z. B. den Vorteil, dass der Hilfslenkungsstrang von dem Serienlenkungsstrang in einem Schadensfall abgekoppelt werden kann. Dies schützt vorzugsweise einerseits die flexible Wellenverbindung vor zu hohen Drehmomenten. Andererseits ist vorzugsweise im Falle einer Fehlfunktion, beispielsweise bei einem Blockieren des Hilfslenkungsstrangs, der gesamte Hilfslenkungsstrang vom Serienlenkungsstrang entkoppelbar. Der Serienlenkungsstrangbleibt hierbei allerdings zweckmäßig weiterhin bedienbar.

Die Überlastkupplung kann z. B. in Form einer spielfreien Drehmomentbegrenzung mit oder ohne ein automatisches Wiedereinrasten realisiert sein. Es ist vorstellbar, dass die Überlastkupplung als z. B. eine federvorgespannte Kugel-Rast-Kupplung, eine federvorgespannte Kugel-Rast-Modul-Kupplung, eine federvorgespannte Rutschkupplung, eine magnetische Dauerschlupfkupplung, oder eine pneumatische oder elektromagnetische Kupplung realisiert sein kann.

Es ist möglich, dass die Überlastkupplung vorzugsweise manuell aktivierbar und deaktivierbar ist, um eine Lenkung des Kraftfahrzeugs über die beifahrerseitige Lenkvorrichtung zu aktivieren oder zu deaktivieren.

Die Überlastkupplung kann z. B. manuell deaktiviert werden, falls der Hilfslenkungsstrang über einen längeren Zeitraum nicht benötigt wird. So ist es vorstellbar, dass die manuelle Abkopplung und die manuelle Ankopplung durch eine Betätigungsvorrichtung vom Kraftfahrzeug-Inneren aus z. B. durch einen Fahrlehrer aktiviert oder deaktiviert werden kann.

In einer weiteren Ausführungsform der Erfindung umfasst das Lenksystem vorzugsweise eine Lagerung (z. B. Flanschlagerung) zur Lagerung der flexiblen Wellenverbindung an ihrem dem Lenkgetriebe zugewandten Endbereich. Die Lagerung dient insbesondere zum Schutz der flexiblen Wellenverbindung vor Radialkräften, die z. B. aus einer Drehmomentübertragung durch die weiter unten erwähnte Drehrichtungsumkehreinrichtung, insbesondere deren Zahnräder, resultieren können.

Nach einer weiteren Ausführungsform der Erfindung kann die fahrerseitige Lenkvorrichtung über eine Drehmomentübertragungsvorrichtung zum Übertragen eines Drehmoments mit dem Lenkgetriebe in Verbindung stehen, wobei die Drehmomentübertragungsvorrichtung vorzugsweise eine Lenkungsgelenkwelle aufweisen kann. Es ist möglich, dass die Drehmomentübertragungsvorrichtung beispielsweise eine längenverstellbare Lenkungsgelenkwelle mit mindestens einem Kreuzgelenk umfasst.

Nach einer weiteren Ausführungsform der Erfindung umfasst das Lenksystem z. B. eine Lagerung (z. B. ein Flanschlager) zur Lagerung der Drehmomentübertragungsvorrichtung an ihrem dem Lenkgetriebe zugewandten Endbereich und/oder zum Schutz des Lenkgetriebes vor durch die flexible Wellenverbindung übertragbaren radialen Kräften.

Nach einer weiteren Ausführungsform der Erfindung ist relativ zur Übertragungsrichtung des Drehmoments der beifahrerseitigen Lenkvorrichtung zwischen der flexiblen Wellenverbindung und dem Lenkgetriebe eine Drehrichtungsumkehreinrichtung (z. B. ein Zahnradpaar) zur Umkehr der Drehrichtung des Drehmoments der flexiblen Wellenverbindung angeordnet. Vorzugsweise ist die Drehrichtungsumkehreinrichtung als Zahnradtrieb ausgebildet und/oder relativ zur Übertragungsrichtung des Drehmoments der beifahrerseitigen Lenkvorrichtung zwischen der Überlastkupplung und dem Lenkgetriebe angeordnet. Die Drehrichtungsumkehreinrichtung hat insbesondere den Vorteil, dass eine Drehbewegung der flexiblen Wellenverbindung in eine gegenläufige Drehbewegung überführt werden kann. Andererseits ist die Drehrichtungsumkehreinrichtung vorzugsweise vorgesehen, ein Drehmoment, das an der flexiblen Wellenverbindung anliegt, an das Lenkgetriebes weiterzuleiten.

Nach einer weiteren Ausführungsform der Erfindung umfasst das Lenksystem vorzugsweise ein Lagerprofil, vorzugsweise zur kraftfahrzeugfesten Montage, und zumindest eines von folgenden ist durch das Lagerprofil gehalten: das Lenkgetriebe, die Überlastkupplung, die Lagerung zur Lagerung der flexiblen Wellenverbindung, die Lagerung zur Lagerung der Drehmomentübertragungsvorrichtung und/oder die Drehrichtungsumkehreinrichtung.

Es ist möglich, dass das Drehmoment der Lenkvorrichtung über die flexible Wellenverbindung im Wesentlichen übersetzungsfrei auf das Lenkgetriebe übertagbar ist. Dies hat den Vorteil, dass die flexible Wellenverbindung ein Übersetzungsverhältnis von quasi 1:1 aufweisen kann.

Nach noch einer weiteren Ausführungsform der Erfindung kann die fahrerseitige Lenkvorrichtung und/oder die beifahrerseitige Lenkvorrichtung zur Übertragung eines Drehmoments rein mechanisch mit dem Lenkgetriebe in Verbindung stehen.

Durch die übersetzungsfreie Übertragung und/oder die rein mechanische Übertragung können z. B. zusätzliche Bauteilkomponenten und Kosten eingespart werden, da beispielsweise hydrostatische Unterstützungssysteme bestehend beispielsweise aus Hydraulikpumpen, Hydraulikleitungen, einem Hydraulikmotor und einem Ausgleichsbehälter für Hydraulikflüssigkeit nicht erforderlich sind. Die Hydraulikkomponenten sind häufig durch elektrische Systeme zu betreiben, die ein zusätzliches Gewicht und einen zusätzlichen Leistungsverbrauch im Fahrzeug bewirken. Somit kann Raum im Fahrzeug eingespart werden.

Es ist möglich, dass die flexible Wellenverbindung um einen Winkel von 180° gebogen ist, z. B. plus/minus 15° oder 30°.

Die Erfindung umfasst außerdem ein Kraftfahrzeug, vorzugsweise ein Fahrschul-Kraftfahrzeug, mit einem Lenksystem wie hierin offenbart. Das Kraftfahrzeug kann z. B. ein Personenkraftwagen oder ein Nutzfahrzeug sein, insbesondere ein Omnibus oder ein Lastkraftwagen.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Lenksystems gemäß einer Ausführungsform der Erfindung,
- Figur 2: zeigt eine Draufsicht auf das Lenksystem der Figur 1,
- Figur 3A: zeigt eine Detailansicht eines Teils des in den Figuren 1 und 2 gezeigten Lenksystems, und
- Figur 3B: zeigt eine Detailansicht eines anderen Teils des in den Figuren 1 und 2 gezeigten Lenksystems.

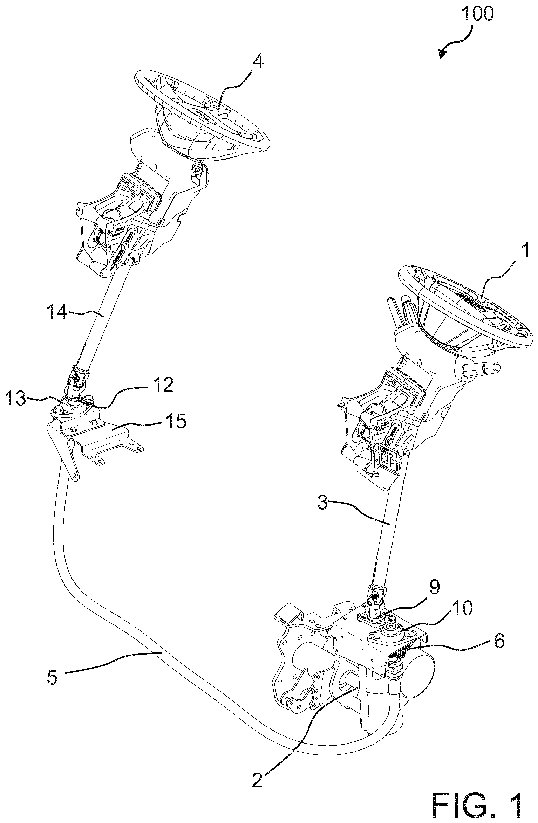

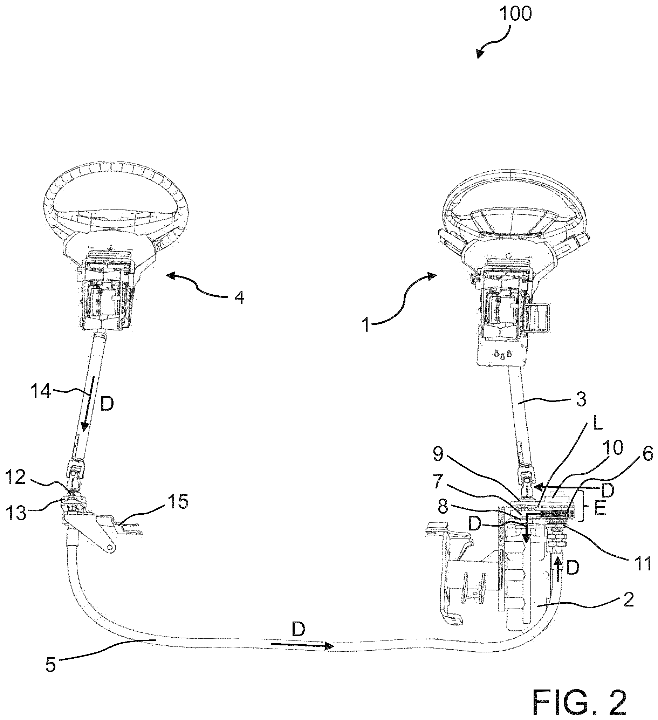

Die Figuren 1 und 2 zeigen ein Lenksystem 100 für ein Kraftfahrzeug, insbesondere ein Fahrschul-Kraftfahrzeug, gemäß einer Ausführungsform der Erfindung.

Das Lenksystem 100 umfasst unter gemeinsamer Bezugnahme auf die Figuren 1 und 2 ein Lenkgetriebe 2, eine fahrerseitige Lenkvorrichtung 1 mit einem Lenkrad zum Lenken des Kraftfahrzeugs durch einen Fahrschüler (männlich/weiblich) über das Lenkgetriebe 2 und eine beifahrerseitige Lenkvorrichtung 4 mit einem Lenkrad zum Lenken des Kraftfahrzeugs durch einen Fahrlehrer (männlich/weiblich) ebenfalls über das Lenkgetriebe 2.

Mittels der beifahrerseitigen Lenkvorrichtung 4 ist es insbesondere bei einem Fahrschulbetrieb des Kraftfahrzeugs möglich, dass der Fahrlehrer, der üblicherweise auf einem Beifahrersitz des Kraftfahrzeugs sitzt, in die Lenkvorgänge des Fahrschülers, der üblicherweise auf dem Fahrersitz sitzt, aktiv eingreifen kann. So ermöglicht die beifahrerseitige Lenkvorrichtung 4 z. B. in einer Situation, bei der der Fahrschüler das Kraftfahrzeug zeitweise nicht unter Kontrolle hat, dass der Fahrlehrer gezielt durch eigene Lenkbewegungen die Kontrolle über das Kraftfahrzeug übernehmen kann, ohne die von dem Beifahrersitz entfernte fahrerseitige Lenkvorrichtung 1 ergreifen zu müssen.

Die beifahrerseitige Lenkvorrichtung 4 steht über eine zumindest in einem Teilbereich ihrer Länge flexible Wellenverbindung 5 (flexible Welle) zum Übertragen eines Drehmoments mit dem Lenkgetriebe 2 in Verbindung. In der gezeigten Ausführungsform ist die flexible Wellenverbindung 5 um einen Winkel von im Wesentlichen 180° gebogen.

Die beifahrerseitige Lenkvorrichtung 4 steht über eine Drehmomentübertragungseinrichtung 14 zum Übertragen eines Drehmoments mit der flexiblen Wellenverbindung 5 in Verbindung. Die Drehmomentübertragungseinrichtung 14 weist eine Lenkungsgelenkwelle mit Kreuzgelenk auf.

Ein Lagerelement 13 ist, relativ zur in Figur 2 schematisch illustrierten Übertragungsrichtung D des Drehmoments der beifahrerseitigen Lenkvorrichtung 4, zwischen der Drehmomentübertragungseinrichtung 14 und der flexiblen Wellenverbindung 5 angeordnet, zum einen zur kraftfahrzeugfesten Montage z. B. über eine Halterung 15 und zum anderen zur Lagerung eines ausgangsseitigen Endes der Drehmomentübertragungseinrichtung 14 und eines eingangsseitigen Endes der flexiblen Wellenverbindung 5.

Die Drehmomentübertragungseinrichtung 14 ist über einen Adapter 12 mit dem Lagerelement 13 und/oder der flexiblen Wellenverbindung 5 verbunden.

Ein Drehmoment der Lenkvorrichtung 4 ist über die flexible Wellenverbindung 5 übersetzungsfrei und somit mit einer Übersetzung von 1:1 auf das Lenkgetriebe 2 übertagbar.

Über eine Überlastkupplung 11 kann die beifahrerseitige Lenkvorrichtung 4 und die flexible Wellenverbindung 5 von dem Lenkgetriebe 2 entkoppelt werden, z. B. zum Schutz der flexiblen Wellenverbindung 5 vor einer Überbeanspruchung und im Falle einer Fehlfunktion des durch die beifahrerseitige Lenkvorrichtung 4 steuerbaren Hilfslenkungsstrangs. Die Überlastkupplung 11 ist manuell aktivierbar und deaktivierbar, um eine Lenkung des Kraftfahrzeugs über die beifahrerseitige Lenkvorrichtung 4 aktivieren oder deaktivieren zu können.

Die fahrerseitige Lenkvorrichtung 1 steht über eine Drehmomentübertragungsvorrichtung 3 zum Übertragen eines Drehmoments mit dem Lenkgetriebe 2 in Verbindung, z. B. mit einer Achse 8 des Lenkgetriebes 2. Vorzugsweise umfasst die Drehmomentübertragungsvorrichtung 3 eine Lenkungsgelenkwelle mit einem Kreuzgelenk.

Sowohl die fahrerseitige Lenkvorrichtung 1 als auch die die beifahrerseitige Lenkvorrichtung 4 dienen zur rein mechanischen Übertragung eines Drehmoments hin zum Lenkgetriebe 2.

Das Lenksystem 100 umfasst eine Drehrichtungsumkehreinrichtung 6, 7 zur Umkehr der Drehrichtung des Drehmoments der flexiblen Wellenverbindung 5. Die Drehrichtungsumkehreinrichtung 6, 7 ist, relativ zur der in Figur 2 schematisch illustrierten Übertragungsrichtung D des Drehmoments der beifahrerseitigen Lenkvorrichtung 4, zwischen der flexiblen Wellenverbindung 5 und dem Lenkgetriebe 2 angeordnet. Die Drehrichtungsumkehreinrichtung 6, 7 ist als Zahnradtrieb mit zwei in Eingriff stehenden Zahnrädern 6, 7 ausgebildet und, relativ zur der in Figur 2 schematisch illustrierten Übertragungsrichtung D des Drehmoments der beifahrerseitigen Lenkvorrichtung 4, insbesondere zwischen der Überlastkupplung 11 und dem Lenkgetriebe 2 angeordnet. Das Zahnrad 7 ist dabei drehfest an die Achse 8 des Lenkgetriebes 2 gekoppelt.

Die flexible Wellenverbindung 5 ist an ihrem dem Lenkgetriebe 2 zugewandten Endbereich E mittels einer als Flanschlager ausgeführten Lagerung 10 gelagert, während die Drehmomentübertragungsvorrichtung 3 ebenfalls an ihrem dem Lenkgetriebe 2 zugewandten Endbereich über eine als Flanschlager ausgeführte Lagerung 9 gelagert ist.

Ein Lagerprofil L zur kraftfahrzeugfesten Montage hält das Lenkgetriebe 2, die Lagerung 10 zur Lagerung der flexiblen Wellenverbindung 5, die Lagerung 9 zur Lagerung der Drehmomentübertragungsvorrichtung 3 und die Drehrichtungsumkehreinrichtung 6, 7.

Die flexible Wellenverbindung 5 wird an ihrem ausgangsseitigen Ende mittels zweier Kontermuttern gehaltert. Die Überlastkupplung 11 sitzt zwischen der Lagerung 10 zur Lagerung der flexiblen Wellenverbindung 5 und dem ausgangsseitigen Ende der flexiblen Wellenverbindung 5.

Die Lagerung 10 dient hierbei insbesondere zum Schutz der flexiblen Wellenverbindung 5 vor Radialkräften, die z. B. aus einer Drehmomentübertragung durch die Drehrichtungsumkehreinrichtung 6, 7, insbesondere deren Zahnräder, resultieren können.

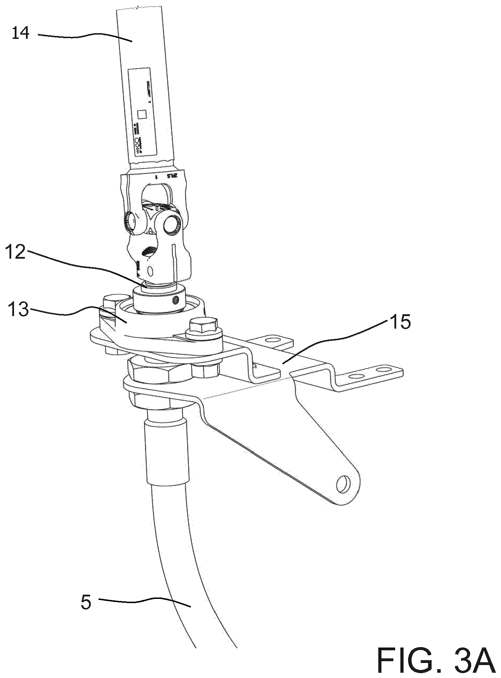

Figur 3A zeigt eine perspektivische Detailansicht eines Teils des in den Figuren 1 und 2 gezeigten Lenksystems 100. Figur 3A zeigt insbesondere den Bereich mit der Drehmomentübertragungseinrichtung 14, dem Adapter 12, der Halterung 15, dem Lagerelement 13 und der flexiblen Wellenverbindung 5.

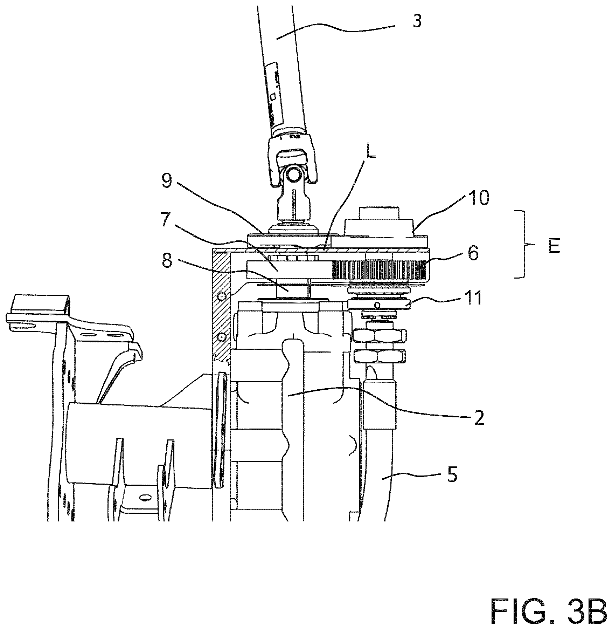

Die Figur 3B zeigt eine perspektivische Detailansicht eines anderen Teils des in den Figuren 1 und 2 gezeigten Lenksystems 100. Figur 3B zeigt insbesondere den Bereich mit der Überlastkupplung 11, der Drehrichtungsumkehreinrichtung 6, 7, der Lagerung 10 zur Lagerung der flexiblen Wellenverbindung 5, der Lagerung 9 zur Lagerung der Drehmomentübertragungsvorrichtung 3, dem Lenkgetriebe 2 einschließlich der Achse 8 des Lenkgetriebes 2 und des Lagerprofils L.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Fahrerseitige Lenkvorrichtung
- 2: Lenkgetriebe
- 3: Drehmomentübertragungsvorrichtung
- 4: Beifahrerseitige Lenkvorrichtung
- 5: Flexible Wellenverbindung, insbesondere flexible Welle
- 6,7: Drehrichtungsumkehreinrichtung
- 8: Achse
- 9: Lagerung
- 10: Lagerung
- 11: Überlastkupplung
- 12: Adapter
- 13: Lagerelement
- 14: Drehmomentübertragungseinrichtung
- 15: Halterung
- E: Endbereich
- L: Lagerprofil
- D: Übertragungsrichtung des Drehmoments der beifahrerseitigen Lenkvorrichtung
- 100: Lenksystem

## Patentansprüche

1. Lenksystem (100) für ein Kraftfahrzeug, vorzugsweise für ein Fahrschul-Kraftfahrzeug, umfassend
ein Lenkgetriebe (2),
eine fahrerseitige Lenkvorrichtung (1) zum Lenken des Kraftfahrzeugs, vorzugsweise durch einen Fahrschüler, über das Lenkgetriebe (2), und
eine beifahrerseitige Lenkvorrichtung (4) zum Lenken des Kraftfahrzeugs, vorzugsweise durch einen Fahrlehrer, über das Lenkgetriebe (2),
**dadurch gekennzeichnet, dass**
die beifahrerseitige Lenkvorrichtung (4) über eine zumindest in einem Teilbereich ihrer Länge flexible Wellenverbindung (5) zum Übertragen eines Drehmoments mit dem Lenkgetriebe (2) in Verbindung steht.

2. Lenksystem (100) nach Anspruch 1, **dadurch gekennzeichnet, dass** die beifahrerseitige Lenkvorrichtung (4) über eine Drehmomentübertragungseinrichtung (14) zum Übertragen eines Drehmoments mit der flexiblen Wellenverbindung (5) in Verbindung steht und vorzugsweise die Drehmomentübertragungseinrichtung (14) eine Lenkungsgelenkwelle aufweist.

3. Lenksystem (100) nach Anspruch 2, **dadurch gekennzeichnet, dass** relativ zur Übertragungsrichtung (D) des Drehmoments der beifahrerseitigen Lenkvorrichtung (4) zwischen der Drehmomentübertragungseinrichtung (14) und der flexiblen Wellenverbindung (5) ein Lagerelement (13) angeordnet ist, zur Lagerung der Drehmomentübertragungseinrichtung (14) und/oder der flexiblen Wellenverbindung (5).

4. Lenksystem (100) nach Anspruch 2 oder 3, **dadurch gekennzeichnet, dass** die Drehmomentübertragungseinrichtung (14) über einen Adapter (12) mit dem Lagerelement (13) und/oder der flexiblen Wellenverbindung (5) verbunden ist.

5. Lenksystem (100) nach einem der vorhergehenden Ansprüche, **dadurch gekennzeichnet, dass** das Lenksystem (100) eine Überlastkupplung (11) umfasst, vorzugsweise mittels der die flexible Wellenverbindung (5) und/oder die beifahrerseitige Lenkvorrichtung (4) von dem Lenkgetriebe (2) entkoppelbar ist.

6. Lenksystem (100) nach Anspruch 5, **dadurch gekennzeichnet, dass** die Überlastkupplung (11) manuell aktivierbar und deaktivierbar ist, um eine Lenkung des Kraftfahrzeugs über die beifahrerseitige Lenkvorrichtung (4) zu aktivieren oder zu deaktivieren.

7. Lenksystem (100) nach einem der vorhergehenden Ansprüche, **dadurch gekennzeichnet, dass** das Lenksystem (100) eine Lagerung (10) zur Lagerung der flexiblen Wellenverbindung (5) an ihrem dem Lenkgetriebe (2) zugewandten Endbereich (E) umfasst.

8. Lenksystem (100) nach einem der vorhergehenden Ansprüche, **dadurch gekennzeichnet, dass** die fahrerseitige Lenkvorrichtung (1) über eine Drehmomentübertragungsvorrichtung (3) zum Übertragen eines Drehmoments mit dem Lenkgetriebe (2) in Verbindung steht und vorzugsweise die Drehmomentübertragungsvorrichtung (3) eine Lenkungsgelenkwelle aufweist.

9. Lenksystem (100) nach Anspruch 8, **dadurch gekennzeichnet, dass** das Lenksystem (100) eine Lagerung (9) zur Lagerung der Drehmomentübertragungsvorrichtung (3) an ihrem dem Lenkgetriebe (2) zugewandten Endbereich und/oder zum Schutz des Lenkgetriebes (2) vor durch die flexible Wellenverbindung (5) übertragbaren radialen Kräften umfasst.

10. Lenksystem (100) nach einem der vorhergehenden Ansprüche, **dadurch gekennzeichnet, dass** relativ zur Übertragungsrichtung (D) des Drehmoments der beifahrerseitigen Lenkvorrichtung (4) zwischen der flexiblen Wellenverbindung (5) und dem Lenkgetriebe (2) eine Drehrichtungsumkehreinrichtung (6, 7) zur Umkehr der Drehrichtung des Drehmoments der flexiblen Wellenverbindung (5) angeordnet ist und vorzugsweise die Drehrichtungsumkehreinrichtung (6, 7) als Zahnradtrieb ausgebildet ist.

11. Lenksystem (100) nach Anspruch 10 und einem der Ansprüche 5 oder 6, **dadurch gekennzeichnet, dass** die Drehrichtungsumkehreinrichtung (6, 7) relativ zur Übertragungsrichtung (D) des Drehmoments der beifahrerseitigen Lenkvorrichtung (4) zwischen der Überlastkupplung (11) und dem Lenkgetriebe (2) angeordnet ist.

12. Lenksystem (100) nach einem der vorhergehenden Ansprüche, **dadurch gekennzeichnet, dass** das Lenksystem (100) ein Lagerprofil (L), vorzugsweise zur kraftfahrzeugfesten Montage, umfasst und zumindest eines von folgenden durch das Lagerprofil (L) gehalten ist:
- das Lenkgetriebe (2),
- die Lagerung (10) zur Lagerung der flexiblen Wellenverbindung (5),
- die Lagerung (9) zur Lagerung der Drehmomentübertragungsvorrichtung (3),
- die Drehrichtungsumkehreinrichtung (6, 7).

13. Lenksystem (100) nach einem der vorhergehenden Ansprüche, **dadurch gekennzeichnet,**
a) **dass** das Drehmoment der beifahrerseitigen Lenkvorrichtung (4) über die flexible Wellenverbindung (5) übersetzungsfrei auf das Lenkgetriebe (2) übertagbar ist; und/oder
b) **dass** die beifahrerseitige Lenkvorrichtung (4) zur Übertragung eines Drehmoments rein mechanisch mit dem Lenkgetriebe (2) in Verbindung steht.

14. Lenksystem (100) nach einem der vorhergehenden Ansprüche, **dadurch gekennzeichnet, dass** die flexible Wellenverbindung (5) um einen Winkel von 180° gebogen ist, plus/minus 15° oder 30°.

15. Kraftfahrzeug, vorzugsweise Fahrschul-Kraftfahrzeug, mit einem Lenksystem (100) nach einem der vorhergehenden Ansprüche.

## Claims

1. A steering system (100) for a motor vehicle, preferably for a driving-school motor vehicle, comprising
a steering gear (2),
a driver-side steering apparatus (1) for steering the motor vehicle, preferably by way of a learner driver, via the steering gear (2), and
a front passenger-side steering apparatus (4) for steering the motor vehicle, preferably by way of a driving instructor, via the steering gear (2), **characterized in that**
the front passenger-side steering apparatus (4) is connected via a shaft connection (5) which is flexible at least in a part region of its length to the steering gear (2) for the transmission of a torque.

2. The steering system (100) according to Claim 1, **characterized in that** the front passenger-side steering apparatus (4) is connected to the flexible shaft connection (5) via a torque transmission device (14) for the transmission of a torque, and the torque transmission device (14) preferably has an articulated steering shaft.

3. The steering system (100) according to Claim 2, **characterized in that** a bearing element (13) is arranged between the torque transmission device (14) and the flexible shaft connection (5) relative to the transmission direction (D) of the torque of the front passenger-side steering apparatus (4), for mounting the torque transmission device (14) and/or the flexible shaft connection (5).

4. The steering system (100) according to Claim 2 or 3, **characterized in that** the torque transmission device (14) is connected via an adapter (12) to the bearing element (13) and/or the flexible shaft connection (5).

5. The steering system (100) according to one of the preceding claims, **characterized in that** the steering system (100) comprises an overload coupling (11), by means of which the flexible shaft connection (5) and/or the front passenger-side steering apparatus (4) can preferably be decoupled from the steering gear (2).

6. The steering system (100) according to Claim 5, **characterized in that** the overload coupling (11) can be activated and deactivated manually, in order to activate or to deactivate a steering operation of the motor vehicle via the front passenger-side steering apparatus (4) .

7. The steering system (100) according to one of the preceding claims, **characterized in that** the steering system (100) comprises a bearing system (10) for mounting the flexible shaft connection (5) on its end region (E) which faces the steering gear (2).

8. The steering system (100) according to one of the preceding claims, **characterized in that** the driver-side steering apparatus (1) is connected to the steering gear (2) via a torque transmission apparatus (3) for the transmission of a torque, and the torque transmission apparatus (3) preferably has an articulated steering shaft.

9. The steering system (100) according to Claim 8, **characterized in that** the steering system (100) comprises a bearing system (9) for mounting the torque transmission apparatus (3) on its end region which faces the steering gear (2) and/or for protecting the steering gear (2) against radial forces which can be transmitted by way of the flexible shaft connection (5).

10. The steering system (100) according to one of the preceding claims, **characterized in that** a rotational direction reversal device (6, 7) for the reversal of the rotational direction of the torque of the flexible shaft connection (5) is arranged between the flexible shaft connection (5) and the steering gear (2) relative to the transmission direction (D) of the torque of the front passenger-side steering apparatus (4), and the rotational direction reversal device (6, 7) is preferably configured as a gearwheel drive.

11. The steering system (100) according to Claim 10 and either of Claims 5 and 6, **characterized in that** the rotational direction reversal device (6, 7) is arranged between the overload coupling (11) and the steering gear (2) relative to the transmission direction (D) of the torque of the front passenger-side steering apparatus (4) .

12. The steering system (100) according to one of the preceding claims, **characterized in that** the steering system (100) comprises a bearing profile (L), preferably for fixed mounting on the motor vehicle, and at least one of the following is held by way of the bearing profile (L) :
- the steering gear (2),
- the bearing system (10) for mounting the flexible shaft connection (5),
- the bearing system (9) for mounting the torque transmission apparatus (3),
- the rotational direction reversal device (6, 7).

13. The steering system (100) according to one of the preceding claims, **characterized**
a) **in that** the torque of the front passenger-side steering apparatus (4) can be transmitted without a transmission ratio to the steering gear (2) via the flexible shaft connection (5); and/or
b) **in that** the front passenger-side steering apparatus (4) is connected to the steering gear (2) in a purely mechanical manner for the transmission of a torque.

14. The steering system (100) according to one of the preceding claims, **characterized in that** the flexible shaft connection (5) is curved by an angle of 180°, plus/minus 15° or 30°.

15. A motor vehicle, preferably a driving-school motor vehicle, having a steering system (100) according to one of the preceding claims.

## Revendications

1. Système de direction (100) pour un véhicule automobile, de préférence pour un véhicule automobile d'auto-école, comprenant un mécanisme de direction (2),
un dispositif de direction côté conducteur (1) pour diriger le véhicule automobile, de préférence par un apprenti conducteur, par le biais du mécanisme de direction (2), et
un dispositif de direction côté passager (4) pour diriger le véhicule automobile, de préférence par un moniteur d'auto-école,
**caractérisé en ce que**
le dispositif de direction côté passager (4) est en liaison avec le mécanisme de direction (2) par le biais d'une liaison d'arbre (5) flexible dans au moins une région partielle de sa longueur, pour transmettre un couple.

2. Système de direction (100) selon la revendication 1, **caractérisé en ce que** le dispositif de direction côté passager (4) est en liaison avec la liaison d'arbre flexible (5) par le biais d'un dispositif de transfert de couple (14) pour transférer un couple et de préférence, le dispositif de transfert de couple (14) présente un arbre articulé de direction.

3. Système de direction (100) selon la revendication 2, **caractérisé en ce que**, par rapport à la direction de transfert (D) du couple du dispositif de direction côté passager (4), un élément de palier (13) est disposé entre le dispositif de transfert de couple (14) et la liaison d'arbre flexible (5), pour supporter le dispositif de transfert de couple (14) et/ou la liaison d'arbre flexible (5).

4. Système de direction (100) selon la revendication 2 ou 3, **caractérisé en ce que** le dispositif de transfert de couple (14) est connecté à l'élément de palier (13) et/ou à la liaison d'arbre flexible (5) par le biais d'un adaptateur (12).

5. Système de direction (100) selon l'une quelconque des revendications précédentes, **caractérisé en ce que** le système de direction (100) comprend un embrayage de surcharge (11), au moyen duquel la liaison d'arbre flexible (5) et/ou le dispositif de direction côté passager (4) peuvent de préférence être désaccouplés du mécanisme de direction (2).

6. Système de direction (100) selon la revendication 5, **caractérisé en ce que** l'embrayage de surcharge (11) peut être activé et désactivé manuellement, afin d'activer ou de désactiver une direction du véhicule automobile par le biais du dispositif de direction côté passager (4).

7. Système de direction (100) selon l'une quelconque des revendications précédentes, **caractérisé en ce que** le système de direction (100) comprend un support sur palier (10) pour supporter la liaison d'arbre flexible (5) au niveau de sa région d'extrémité (E) tournée vers le mécanisme de direction (2).

8. Système de direction (100) selon l'une quelconque des revendications précédentes, **caractérisé en ce que** le dispositif de direction côté conducteur (1) est en liaison avec le mécanisme de direction (2) par le biais d'un dispositif de transfert de couple (3) pour transférer un couple, et de préférence le dispositif de transfert de couple (3) présente un arbre articulé de direction.

9. Système de direction (100) selon la revendication 8, **caractérisé en ce que** le système de direction (100) comprend un support sur palier (9) pour supporter le dispositif de transfert de couple (3) au niveau de sa région d'extrémité tournée vers le mécanisme de direction (2) et/ou pour protéger le mécanisme de direction (2) contre les forces radiales pouvant être transmises par la liaison d'arbre flexible (5).

10. Système de direction (100) selon l'une quelconque des revendications précédentes, **caractérisé en ce que**, par rapport à la direction de transfert (D) du couple du dispositif de direction côté passager (4), un dispositif d'inversion du sens de rotation (6, 7) est disposé entre la liaison d'arbre flexible (5) et le mécanisme de direction (2) pour inverser le sens de rotation du couple de la liaison d'arbre flexible (5) et, de préférence, le dispositif d'inversion de sens de rotation (6, 7) est réalisé sous forme d'entraînement à roue dentée.

11. Système de direction (100) selon la revendication 10 est selon l'une quelconque des revendications 5 ou 6, **caractérisé en ce que** le dispositif d'inversion du sens de rotation (6, 7) est disposé, par rapport à la direction de transfert (D) du couple du dispositif de direction côté passager (4), entre l'embrayage de surcharge (11) et le mécanisme de direction (2).

12. Système de direction (100) selon l'une quelconque des revendications précédentes, **caractérisé en ce que** le système de direction (100) comprend un profilé de palier (L), de préférence pour le montage fixe au véhicule automobile, et au moins l'un des éléments suivants est retenu par le profilé de palier (L) :
- le mécanisme de direction (2),
- le support sur palier (10) pour supporter la liaison d'arbre flexible (5),
- le support sur palier (9) pour supporter le dispositif de transfert de couple (3),
- le dispositif d'inversion du sens de rotation (6, 7) .

13. Système de direction (100) selon l'une quelconque des revendications précédentes, **caractérisé en ce que**
a) le couple du dispositif de direction côté passager (4) peut être transféré par le biais de la liaison d'arbre flexible (5) sans démultiplication au mécanisme de direction (2) ; et/ou
b) le dispositif de direction côté passager (4) est en liaison purement mécanique avec le mécanisme de direction (2) pour transférer un couple.

14. Système de direction (100) selon l'une quelconque des revendications précédentes, **caractérisé en ce que** la liaison d'arbre flexible (5) est courbée suivant un angle de 180°, plus ou moins 15° ou 30°.

15. Véhicule automobile, de préférence véhicule d'auto-école, comprenant un système de direction (100) selon l'une quelconque des revendications précédentes.
